# EUROPÄISCHE PATENTSCHRIFT

(11) **EP 4 260 019 B1**
(45) Veröffentlichungstag und Bekanntmachung des Hinweises auf die Patenterteilung: **11.06.2025**
(21) Anmeldenummer: 21824490.3
(22) Anmeldetag: 26.11.2021
(51) Int. Cl.: G01F 1/84

(54) **PROZESSÜBERWACHUNGSVORRICHTUNG**
PROCESS MONITORING DEVICE
DISPOSITIF DE SURVEILLANCE DE PROCESSUS

(30) Priorität: 08.12.2020 DE 102020132685
(43) Veröffentlichungstag der Anmeldung: 18.10.2023
(73) Patentinhaber: Endress+Hauser Flowtec AG, 4153 Reinach (CH)
(72) Erfinder: SCHWENTER, Benjamin, 4226 Breitenbach (CH); LALLA, Robert, 79541 Lörrach (DE); NEESER, Samuel, 4147 Aesch (CH); ANKLIN, Martin Josef, 4143 Dornach (CH); BITTO, Ennio, 4147 Aesch (CH); KIEFER, Ruben, 4107 Ettingen (CH); WERNER, Marc, 79639 Grenzach-Wyhlen (DE)
(74) Vertreter: Endress + Hauser Group Services (Deutschland) AG+Co. KG
(86) Internationale Anmeldenummer: PCT/EP2021/083174
(87) Internationale Veröffentlichungsnummer: WO 2022/122418

(56) Entgegenhaltungen:
- EP-B1- 1 954 565
- DE-A1- 102018 119 887
- US-A1- 2020 116 612

## Beschreibung

Die Erfindung betrifft eine Prozessüberwachungsvorrichtung für pharmazeutische Bioprozessanwendungen.

Anlagen für Bioprozessanwendungen - Beispiele dafür sind Bioreaktoren oder Crossflow-Anlagen - dienen zur Aufnahme, zur Lagerung und/oder zum Mischen von biologischen Medien, welche Fluide und/oder Feststoffe umfassen. Die biologischen Medien werden üblicherweise in Einwegbehältern und/oder -beuteln bereitgestellt und in ein Gehäuse der Anlage für Bioprozessanwendungen eingebracht, wo sie gelagert, temperiert und/oder durchmischt werden. In einer solchen Anlage für Bioprozessanwendungen werden die Prozesseigenschaften der biologischen Medien mit unterschiedlichen Sensoren untersucht und/oder überwacht. An der Anlage für Bioprozessanwendungen kann eine oder können mehrere Sensoren angeordnet sein, mit der Messungen an dem Medium im Einwegbehälter oder im Schlauchsystem vorgenommen werden, wie z.B. Temperatur- oder pH-Wertmessungen. Hierbei wird der Sensor an einer Außenfläche des Gehäuses der Anlage für Bioprozessanwendungen so angeordnet, dass sie mit einem mediumsberührenden Abschnitt des Sensors durch die Gehäusewandung der Anlage für Bioprozessanwendungen hindurch in den Behälter und das Medium eindringt. Alternativ können die Sensoren in einem Schlauchsystem integriert sein, welches dazu eingerichtet ist, das Medium aus dem Behälter zu entnehmen. Dieses Schlauchsystem ist üblicherweise an der Außenfläche des Gehäuses angeordnet. Die Handhabung der Anlage für Bioprozessanwendungen erfolgt anwendungsabhängig in einer sterilen Umgebung oder unter Reinraumbedingungen.

Die DE 10 2016 008 655 A1 offenbart eine Anlage für biotechnologische Anwendungen, insbesondere einen Bioreaktor, welche an der Mantelfläche des Gehäuses Systemschienen oder Träger aufweist, zum Anbringen von Schläuchen und Sensoren an der Außenseite des Gehäuses. Weiterhin werden Triclamps als Befestigungsmittel offenbart.

Coriolis-Durchflussmessgeräte werden üblicherweise bei prozessautomatisierten Industrieanlagen in Rohrleitungen über Anschlussvorrichtungen wie Flansche, Verbindungsstutzen etc. eingesetzt. Ein Beispiel dafür ist eine Abfüllstation für flüssige oder gasförmige Stoffe, wie sie in der DE 10 2006 013 826 A1 oder eine Prozessleitung wie sie in der DE 10 2017 128 565 A1 offenbart wird.

Es sind außerdem Coriolis-Durchflussmessgeräte mit austauschbaren Einweg-Messrohrmodulen bekannt, die für Single-Use Anwendungen geeignet sind. So wird beispielsweise in der WO 2011/099989 A1 ein Verfahren zur Herstellung eines monolithisch ausgebildeten Messrohrmoduls eines Coriolis-Durchflussmessgerätes mit gebogenen Messrohren offenbart, wobei der Messrohrkörper der jeweiligen Messrohre zuerst massiv aus einem Polymer gebildet und der Kanal zum Führen des fließfähigen Mediums anschließend spannend eingearbeitet wird. Die WO 2011/099989 A1 lehrt - ebenso wie die US 10,209,113 B2 - einen modularen Aufbau des Coriolis-Durchflussmessgerätes, wodurch ein Austausch des mediumsberührenden Teils des Messgerätes ermöglicht wird.

In der US 2020/0116612 A1 wird ein Coriolis-Durchflussmesser mit Einmalschläuchen und wiederverwendbarem Messgerät vorgestellt. Der Coriolis-Durchflussmesser wird zur Messung des Flüssigkeitsdurchflusses aus einer Bioprozesseinheit verwendet.

Bisher ist nichts über die Integration des Coriolis-Durchflussmessgerätes in Prozessüberwachungsanlagen für pharmazeutische Bioprozessanwendungen bekannt. Der Erfindung liegt die Aufgabe zugrunde dem Abhilfe zu schaffen.

Die Aufgabe wird gelöst durch die Prozessüberwachungsvorrichtung nach Anspruch 1.

Das erfindungsgemäße Prozessüberwachungsvorrichtung, bevorzugt für pharmazeutische Bioprozessanwendungen, umfassend:
- ein Messrohrmodul,
   wobei das Messrohrmodul mindestens ein, von einem Medium durchströmbares Messrohr umfasst,
   wobei das Messrohrmodul eine erste Schwingungserregerkomponente mindestens eines Schwingungserregers aufweist, welcher dazu eingerichtet ist, das Messrohrmodul insbesondere das mindestens eine Messrohr zu Schwingungen anzuregen,
   wobei das Messrohrmodul eine erste Schwingungssensorkomponente mindestens eines Schwingungssensors aufweist, welcher dazu eingerichtet ist, die Schwingungen des mindestens einen Messrohres zu erfassen,
- ein Aufnahmemodul,
   wobei das Aufnahmemodul eine Aufnahme aufweist,
   wobei das Messrohrmodul in die Aufnahme einführbar ist,
   wobei das Messrohrmodul mechanisch trennbar mit dem Aufnahmemodul verbindbar ist,
   wobei das Aufnahmemodul eine zweite Schwingungserregerkomponente des mindestens einen Schwingungserregers aufweist,
   wobei das Aufnahmemodul eine zweite Schwingungssensorkomponente des mindestens einen Schwingungssensors aufweist; und
- eine Anlage für biotechnische Anwendungen,
   wobei die Anlage ein Gehäuse aufweist,
   wobei das Gehäuse eine Gehäusewandung aufweist, welches ein Gehäuseinneres begrenzt,
   wobei die Gehäusewandung eine Abdeckung aufweist,
   wobei die Abdeckung eine Öffnung aufweist,
   wobei sich das Aufnahmemodul, insbesondere die Aufnahme durch die Öffnung in das Gehäuseinnere erstreckt.

Die erfindungsgemäße Anordnung des Aufnahmemoduls hat den Vorteil, dass eine kompakte Bauweise der Prozessüberwachungsvorrichtung ermöglicht wird und externe mechanische Störungen auf die Durchflussmessung minimiert werden. Die kompakte Bauweise führt zudem dazu, dass die ermittelten Messwerte - wie z.B. Temperatur - nur unwesentlich zwischen etwaigen eingesetzten Sensoren abweicht, so dass Der Einsatz eines Messrohrmoduls in Verbindung mit einem Aufnahmemodul zur Bestimmung einer von dem Massedurchfluss des fließfähigen Mediums abhängigen Messgröße hat den Vorteil, dass somit eine Alternative zur in pharmazeutischen Bioprozessanwendungen üblicherweise eingesetzten Waage zur Bestimmung der eingesetzten Mengen des Mediums bereitgestellt wird. Das Gehäuse weist vorzugsweise eine metallische Gehäusewandung auf, die bevorzugt als Blechteil ausgebildet ist. Der Aufnahmemodulkörper ist massiv aus Stahl gebildet, um ein möglichst störungsfreies Schwingen der Messrohre zu ermöglichen.

Vorteilhafte Ausgestaltung der Erfindung sind Gegenstand der Unteransprüche.

Eine Ausgestaltung sieht vor, dass das Aufnahmemodul einen Abschnitt aufweist,
wobei sich der Abschnitt außerhalb des Gehäuseinnere befindet,
wobei das Aufnahmemodul im Abschnitt einen insbesondere umlaufenden Absatz aufweist,
wobei die Abdeckung eine Abdeckungsfläche aufweist,
wobei der Absatz eine Absatzfläche aufweist,
wobei die Absatzfläche und die Abdeckungsfläche einander zugewandt sind.

Durch das Vorsehen eines Absatzes an dem Aufnahmemodul wird eine Gegenfläche zum Befestigen des Aufnahmemoduls über die im Gehäuse vorzugsweise innenseitig angeordnete Befestigungsanordnung geschaffen. Zwischen der Absatzfläche und der Abdeckungsfläche ist vorzugsweise ein Dichtmittel angeordnet zum Abdichten des Aufnahmemoduls und Vermeidung des Eintretens von Flüssigkeiten in das Gehäuseinnere beim Reinigen der Anlage.

Eine Ausgestaltung sieht vor, dass sich die Aufnahme in eine Aufnahmerichtung erstreckt,
wobei das Aufnahmemodul derart in der Öffnung angeordnet ist, dass die Aufnahmerichtung einen vektoriellen Anteil mit einer Richtung entgegengesetzt zu einer Gravitationsrichtung aufweist.

Die spezielle Anordnung hat den Vorteil, dass die Messrohre somit selbstentleerend sind. Durch die Neigung der Aufnahme relativ zu einer waagerechten Referenzachse fließt das sich im Messrohr befindliche Medium heraus. Dabei orientiert sich die Neigung nach der Norm ASME BPE GSD1 bis GSD3 (2019).

Eine Ausgestaltung sieht vor, dass das Aufnahmemodul eine Befestigungsanordnung umfasst,
wobei die Befestigungsanordnung im Gehäuseinneren angeordnet ist,
wobei die Befestigungsanordnung dazu eingerichtet ist, das Aufnahmemodul mit der Abdeckung mechanisch zu verbinden.

Der Vorteil der Ausgestaltung liegt darin, dass eine bessere Reinigbarkeit von außerhalb des Gehäuses gewährleistet wird, wenn sich die Befestigungsanordnung ausschließlich im Gehäuseinneren befindet. Keine weiteren Öffnungen in der Abdeckung bedeutet weniger Stellen an denen Feuchtigkeit in das Gehäuseinnere eintreten kann.

Eine Ausgestaltung sieht vor, dass die Befestigungsanordnung ein erstes Befestigungsmittel umfasst,
wobei das erste Befestigungsmittel mit dem Aufnahmemodul insbesondere in einer Führung beweglich verbunden ist,
wobei die Befestigungsanordnung ein zweites Befestigungsmittel umfasst,
wobei das erste Befestigungsmittel in Wirkung mit dem zweiten Befestigungsmittel steht.

Eine Ausgestaltung sieht vor, dass die Abdeckung eine Rückseite aufweist,
wobei das zweite Befestigungsmittel dazu eingerichtet ist, das erste Befestigungsmittel zumindest teilweise bevorzugt entgegengesetzt zur Rückseite zu verbiegen.

Eine Ausgestaltung sieht vor, dass die Anlage eine Single-Use Anlage, insbesondere einen Bioreaktor, eine Anlage für chromatographische Aufreinigungsverfahren, eine Crossflow-Anlage oder ähnliches umfasst.

Als Bioreaktor bzw. Fermentationsreaktor bezeichnet man einen Behälter, in dem unter kontrollierten, vorher definierten Bedingungen biologische Prozesse ablaufen bzw. bestimmte Kulturen im einem Medium kultiviert werden sollen. Die Anwendung eines Bioreaktors ist wichtiger Bestandteil der pharmazeutische Bioprozesstechnologie. Die Behälter können in einem Gehäuse angeordnet sein und die Prozesseigenschaften des Mediums mittels Sensoren überwacht werden.

Unter Chromatographie ist ein Verfahren zu verstehen, das die Auftrennung eines Stoffgemisches auf Grund einer unterschiedlichen Verteilung seiner Einzelbestandteile zwischen einer stationären und einer mobilen Phase erlaubt. Dies findet beispielsweise Anwendung in der Produktion zur Reinigung von Substanzen, insbesondere in der Herstellung von Biopharmazeutika. Die Cross-Flow-Filtration, zu deutsch Querstromfiltration, ist eine weitere Methode zum Filtern von Medien.

Eine Ausgestaltung sieht vor, dass zumindest das Messrohrmodul und das Aufnahmemodul ein modulares Coriolis-Durchflussmessgerät bilden.

Coriolis-Durchflussmessgeräte sind dafür bekannt, dass sie eine sehr hohe Messgenauigkeit aufweisen und zusätzlich zum Massedurchfluss auch Auskunft zur Viskosität und zur Dichte des zu führenden Mediums geben können. Dies ist mit herkömmlichen Gewichtswaagen nicht möglich.

Die Erfindung wird anhand der nachfolgenden Figuren näher erläutert. Es zeigt:
Fig. 1: eine erfindungsgemäße Prozessüberwachungsvorrichtung;
Fig. 2A-C: drei Ansichten auf ein Messrohr- und Aufnahmemodul;
Fig. 3A-B: eine teilweise geschnittene Innenansicht auf die Prozessüberwachungsvorrichtung mit einer ersten Ausgestaltung der Befestigungsanordnung und eine Seitenansicht auf die erste Ausgestaltung der Befestigungsanordnung;
Fig. 4: eine teilweise geschnittene Innenansicht auf die Prozessüberwachungsvorrichtung mit einer zweiten Ausgestaltung der Befestigungsanordnung;
Fig. 5: eine Seitenansicht auf das erste Befestigungsmittel der zweiten Ausgestaltung der Befestigungsanordnung 84.

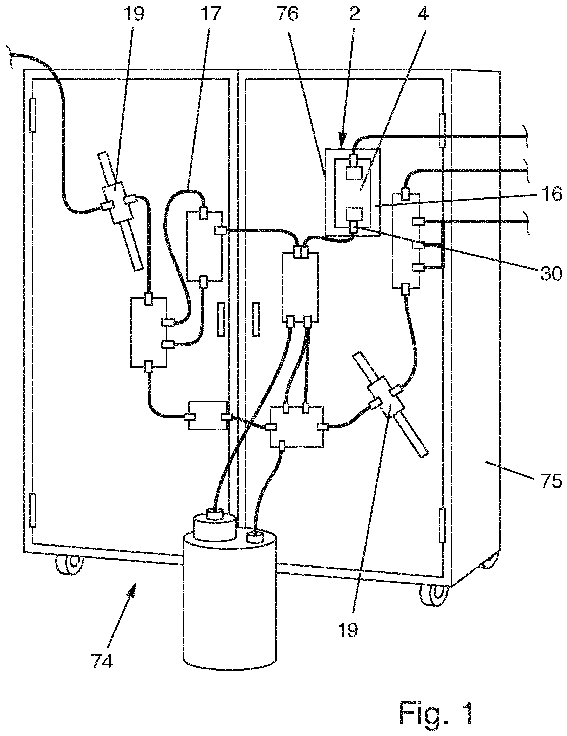

Die Fig. 1 zeigt eine erfindungsgemäße Prozessüberwachungsvorrichtung für pharmazeutische Bioprozessanwendungen in einer Anlage für biotechnische Anwendungen 74. Ein Messrohrmodul 4 und ein Aufnahmemodul 16 bilden zusammen ein Coriolis-Druchflussmessgerät 2. Das Messrohrmodul 4 weist mindestens ein, von einem Medium durchströmbares Messrohr 3 und ist als austauschbare Komponente des Coriolis-Durchflussmessgerätes 2 eingerichtet. Dafür weist es vorzugsweise keine elektronischen Komponenten auf, welche über einen elektrischen Kontakt mit einer Spannungsquelle versorgt werden müssen. Das Messrohrmodul 4 weist eine erste Schwingungserregerkomponente mindestens eines Schwingungserregers auf, welcher dazu eingerichtet ist, das Messrohrmodul 4, insbesondere das mindestens eine Messrohr 3 zu Schwingungen anzuregen. Zudem weist das Messrohrmodul 4 eine erste Schwingungssensorkomponente mindestens eines Schwingungssensors auf, welcher dazu eingerichtet ist, die Schwingungen des mindestens einen Messrohres 3 zu erfassen. Die erste Schwingungserregerkomponente und die erste Schwingungssensorkomponente sind vorzugsweise Magnete. Weiterhin weist das Messrohrmodul 4 Prozessanschlüsse 30 auf, die gleichzeitig als Verteilerstück ausgebildet sind.

Das Aufnahmemodul 16 ist ein fester Bestandteil der Anlage für biotechnische Anwendungen 74 und weist die elektronischen Komponenten auf, mit denen das Coriolis-Durchflussmessgerät 2 betrieben wird und das durchflussabhängige Messsignal erfasst wird. Das Aufnahmemodul 16 weist eine Aufnahme 23 für das Messrohrmodul 4 auf, in welche das Messrohrmodul 4 einschiebbar ist. Zudem ist das Messrohrmodul 4 mechanisch trennbar bzw. lösbar mit dem Aufnahmemodul 16 verbindbar um einen bedienerfreundlichen Austausch des Messrohrmoduls 4 zu gewährleisten. Bei einem Wechsel der Anwendung kann das Messrohrmodul 4 gegen ein neues sterilisiertes Messrohrmodul 4 ausgetauscht werden. Das Aufnahmemodul 16 weist eine zweite Schwingungserregerkomponente des mindestens einen Schwingungserregers und eine zweite Schwingungssensorkomponente des mindestens einen Schwingungssensors auf. Dabei handelt es sich um die Erregerspule und die mindestens eine Sensorspule, welche jeweils mit einer Messschaltung elektrisch verbunden sind und darüber gesteuert bzw. bemessen werden. Das Aufnahmemodul 16 ist nicht mediumsberührend ausgelegt, jedoch so ausgestaltet, dass es reinigbar ist.

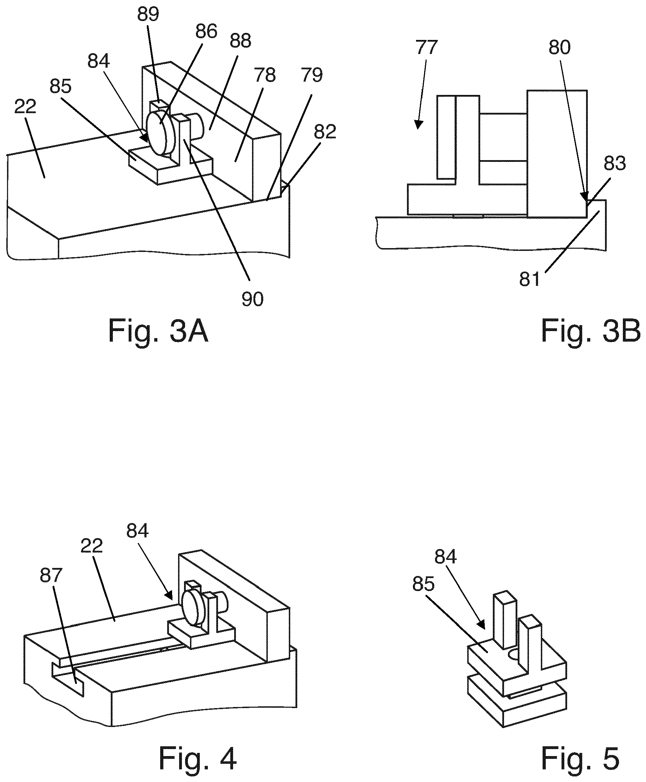

Die Anlage 74 für biotechnische Anwendungen weist ein Gehäuse 75 mit einer Gehäusewandung 76 auf, welches ein Gehäuseinneres begrenzt. Die Gehäusewandung 76 ist aus Blech gefertigt. Das Aufnahmemodul 16 ist in einer Öffnung der Gehäusewandung 76 angeordnet. Das Aufnahmemodul 16, insbesondere die Aufnahme des Aufnahmemoduls 16 erstreckt sich durch die Öffnung 79 in das Gehäuseinnere. Eine Befestigung des Aufnahmemoduls 16 erfolgt durch das Gehäuseinnere (siehe Fig.3-6). Das Aufnahmemodul 23 kann derart in der Öffnung 79 angeordnet sein, dass die Aufnahmerichtung - welche durch die Richtung der Erstreckung des Aufnahmemoduls definiert ist - einen vektoriellen Anteil mit einer Richtung entgegengesetzt zu einer Gravitationsrichtung aufweist. Die Anlage 74 kann einen Bioreaktor, eine Anlage für chromatographische Aufreinigungsverfahren, eine Crossflow-Anlage oder ähnliches umfassen.

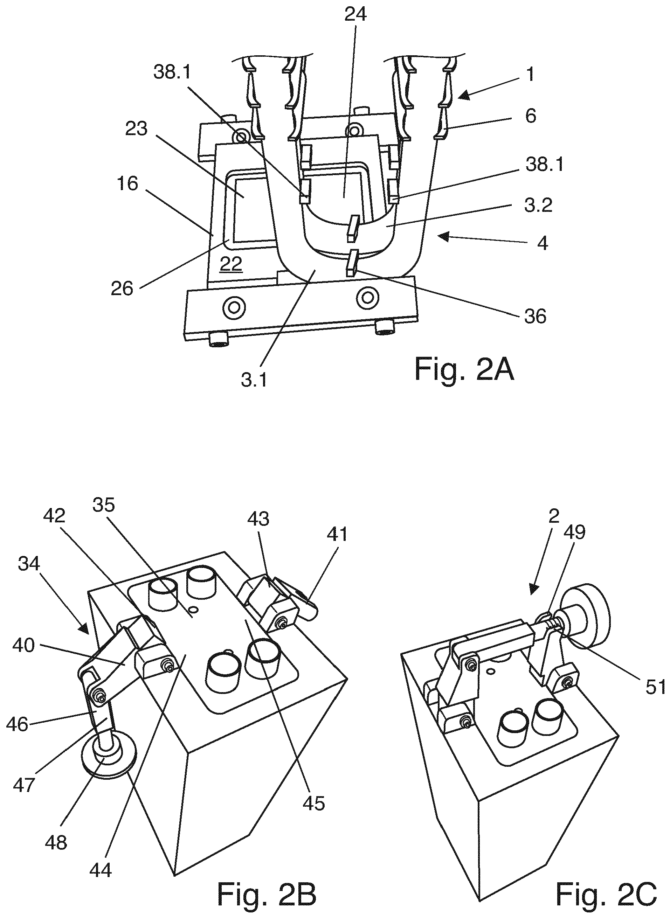

Die Fig. 2A-C zeigen eine Bilderreihe einzelner Montageschritte eines erfindungsgemäßen Messgerätes 2. Das Messrohrmodul 4 umfasst zwei Messrohre 3.1, 3.2, die über eine Koppleranordnung 1 miteinander mechanische gekoppelt sind. Die Koppleranordnung 1 umfasst in der abgebildeten Ausgestaltung sechs Kopplerelemente 6, welche die beiden Messrohre 3.1, 3.2 teilweise umgreifen. Das Messrohrmodul 4 ist als ein Einwegartikel ausgebildet und kann in ein vorgesehenes Aufnahmemodul 16 mechanisch lösbar angeordnet und befestigt werden. Die zwei Messrohre 3.1, 3.2 umfassen jeweils einen Messrohrkörper, welcher zumindest teilweise aus Stahl gebildet ist. An den Messrohrkörpern sind jeweils ein Erregermagnet 36 und zwei Sensormagnete 38.1, 38.2 angebracht. Das Aufnahmemodul 16 weist eine Aufnahme 23 auf, die von einer Frontfläche des Aufnahmemodulkörpers 22 in dessen Längsrichtung erstreckt. Zudem weist der Aufnahmemodulkörper 22 des Aufnahmemoduls 16 eine Montagefläche 26 auf, auf welche das Messrohrmodul 4, insbesondere die Fixierkörperanordnung 35 im eingebauten Zustand aufliegt, und die derart ausgebildet ist, dass die Messrohre 3.1, 3.2 des Messrohrmoduls 4 nicht die Wandung des Aufnahmemoduls 16 berühren. Die Montagefläche 26 umschließt die Aufnahme 29 in einem Querschnitt, so dass beim Anordnen des Messrohrmoduls 4 ein gesamter Randbereich der Fixierkörperanordnung 35 auf der Montagefläche 26 aufliegt. Die zwei Erregerspulen des Schwingungserregers und die vier Sensorspulen des Schwingungssensors (nicht abgebildet) sind in einer inneren Mantelfläche des Aufnahmemoduls 16 angeordnet, insbesondere jeweils verteilt an zwei diametral orientierte Seitenflächen der Aufnahme 23. Die Erregerspulen und Schwingungsspulen sind bevorzugt in den Aufnahmemodulkörper 22 eingelassen, so dass sie beim Einführen des Messrohrmoduls 4 nicht beschädigt werden.

Im eingebauten Zustand ist das Messrohrmodul 4 in der Aufnahme 23 angeordnet und die Fixierkörperanordnung 35 liegt auf der Montagefläche 26 auf. Das Messrohrmodul 4 ist nun bereit mittels der Fixiervorrichtung 34 an dem Aufnahmemodul 16 befestigt zu werden. Dies ist notwendig, damit eine Messung mit einem stabilen Nullpunkt möglich ist. Dafür weist die Fixiervorrichtung 34 ein erstes Fixierelement 40 und ein zweites Fixierelement 41 auf, welche jeweils schwenkbar ausgebildet sind und eine Fixierfläche 42, 43 aufweisen. Die Fixierflächen 42, 43 befinden sich jeweils an einem ersten Ende des Fixierelementes 40, 41. Die Fixierelemente 40, 41 weisen jeweils einen länglichen Fixierelementkörper auf. Im das erste Ende umfassenden Endabschnitt sind die Fixierelemente 40, 41 an dem Aufnahmemodulskörper 22 schwenkbar um eine Rotationsachse befestigt. Die Fixierelemente 40, 41 sind dazu eingerichtet die Fixierkörperanordnung 44 gegen die Montagefläche 26 zu drücken um somit Bewegungen der Fixierkörperanordnung zu unterdrücken. Das erste Fixierelement 40 ist mit einer schwenkbaren Verbindungsvorrichtung 46 verbunden, die einen Verbindungskörper 47 umfasst. Die Verbindung zwischen dem Fixierelemente 40 und der schwenkbaren Verbindungsvorrichtung 46 befindet sich am zweiten Ende des ersten Fixierelementes 40. Der Verbindungskörper 47 ist zumindest teilweise kubisch und im Endabschnitt zylindrisch ausgebildet. Dort ist am Verbindungskörper 47 eine Schließvorrichtung 48 angeordnet. In der abgebildeten Ausgestaltung weist der Endabschnitt des Verbindungskörpers 47 ein Außengewinde auf und die Schließvorrichtung 48 ist als eine Schraube ausgebildet. Abhängig von der Anwendung und den Anforderungen auf die Messperformance kann die Schließvorrichtung 48 auch als eine Drehmomentschraube, ein Klemmhebel, ein Spannbügel, ein Spanner, ein Schnellspanner, ein Spannhebel, eine Spannpratze, ein Haubenverschluss und/oder ein Exzenterhebel ausgebildet sein. Alternativ (nicht abgebildet) kann die Schließvorrichtung 48 als eine Schnalle, insbesondere eine Maschettenschnalle ausgebildet sein, die an einem ersten Fixierelement 40 der zwei Fixierelemente 40, 41 angeordnet ist. Entsprechend ist ein Schwenkteil am zweiten Fixierelement 41 angeordnet. Dabei ist das Schwenkteil als ein Manschettenschwenkteil ausgebildet, welches mindestens einen Haken, insbesondere einen Manschettenhaken aufweist. Im fixierten Zustand berühren die Fixierflächen 42, 43 der Fixierelemente 40, 41 die Auflageflächen 44, 45 der Fixierkörperanordnung 35. Der Verbindungskörper 47 der Verbindungsvorrichtung 46 steht in Wirkung mit dem zweiten Fixierelement 41, d.h. die Verbindungsvorrichtung 46, insbesondere der Verbindungskörper 47 verbindet das erste Fixierelement 40 mit dem zweiten Fixierelement 41. Das zweite Fixierelement 41 weist am zweiten Ende eine Führung 51 für den Endabschnitt des Verbindungskörper 47 auf. Der Verbindungskörper 47 erstreckt sich im geschlossenen Zustand entlang der Führung 51 des zweiten Fixierelementes 41. Die Schließvorrichtung 48 berührt die Einspannfläche 49 des zweiten Fixierelementes 41. Beim Anziehen der Schließvorrichtung 48 - in Form einer Schraube - werden die zwei Fixierelemente gleichmäßig angenähert. Die Schließvorrichtung 48 drückt gegen die Einspannfläche 49. Dadurch, dass die zwei Fixierelemente 40, 41 schwenkbar um eine Rotationsachse ausgebildet sind, bewirkt das Festziehen und entsprechende Annähern der Fixierelemente 40, 41 eine Kraft auf die Fixierkörperanordnung 35 parallel zur Längsrichtung des Messrohrmoduls 4 in Richtung der Montagefläche 26. Diese Kraft sorgt für eine gleichmäßige Befestigung des Messrohrmoduls 4 am Trägereinheitskörper 22. Die Messrohre 3.1, 3.2 weisen jeweils im Einlaufabschnitt eine Einlauflängsachse und im Auslaufabschnitt eine Auslauflängsachse, wobei eine erste Längsebene durch die Einlauflängsachsen der Messrohre verläuft, wobei eine zweite Längsebene durch die Auslauflängsachsen der Messrohre verläuft, wobei die Fixierkörperanordnung 35 eine zweite Stirnseite aufweist, welche entgegengesetzt zur ersten Stirnseite orientiert ist, wobei die erste Längsebene und die zweite Längsebene eine erste Fläche auf der zweiten Stirnseite der Fixierkörperanordnung 35 begrenzt, wobei die Einlauflängsachse und die Auslauflängsachse des ersten Messrohres 3.1 in einer dritten Längsebene verlaufen, wobei die Einlauflängsachse und die Auslauflängsachse des zweiten Messrohres 3.2 in einer vierten Längsebene verlaufen, wobei die dritte Längsebene und die vierte Längsebene auf der zweiten Stirnseite eine zweite Fläche begrenzen, wobei im Befestigungszustand die Fixierflächen 42, 43 der Fixierelemente 40, 41, insbesondere ausschließlich auf der ersten Fläche aufliegen und dabei außerhalb der zweiten Fläche liegt. Alternativ kann die Fixierkörperanordnung 35 mehrteilig ausgebildet sein, wobei ein Teil stoffschlüssig mit dem mindestens einen Messrohr 3.1, 3.2 verbunden ist und ein weiterer Teil zumindest formschlüssig angebracht ist. Dieser weitere Teil ist derart ausgebildet und eingerichtet als Prozessanschluss für die Messrohre 3.1, 3.2 an eine Prozessleitung zu dienen. Dazu kann der weitere Teil beispielsweise genormte Prozessanschlüsse, wie Flansche oder Gewinde aufweisen.

Die Fig. 3A und B zeigen eine teilweise geschnittene Innenansicht auf die Prozessüberwachungsvorrichtung mit einer ersten Ausgestaltung der Befestigungsanordnung 84 für das Befestigen der Aufnahmemodul 16 an der Gehäusewandung, insbesondere an der Abdeckung 78 und eine Seitenansicht auf die erste Ausgestaltung der Befestigungsanordnung 84. In der Abdeckung 78 ist eine Öffnung 79 eingearbeitet, in welche das Aufnahmemodul 16 angeordnet ist. Das Aufnahmemodul 16, insbesondere die Aufnahme 23 erstreckt sich durch die Öffnung 79 in das Gehäuseinnere 77 des Gehäuses. Zusätzlich zum Aufnahmemodul 16 können sich Pumpen, Lüfter, Kabel, Schläuche, Elektronikbauteile und Behälter für das Medium im Gehäuseinneren 77 befinden. Weiterhin weist das Aufnahmemodul 16 im Aufnahmeabschnitt 80 einen insbesondere umlaufenden Absatz 81 mit einer Absatzfläche 83 auf. Eine Abdeckungsfläche 82 der Abdeckung 78 und die Absatzfläche 83 sind einenader zugewandt und liegen im eingebauten Zustand aufeinander. Der Absatz ist schematisch dargestellt und in der Regel deutlich dicker als die Abdeckung 78. Die Befestigung wird über eine Befestigungsanordnung 84 realisiert, die im Gehäuseinneren 77 angeordnet ist. Die Befestigungsanordnung 84 ist dazu eingerichtet, das Aufnahmemodul 16 mit der Abdeckung 78 mechanisch zu verbinden. Dafür weist sie ein erstes Befestigungsmittel 85 und ein zweites Befestigungsmittel 86 auf. Das erste Befestigungsmittel 85 ist mit dem Aufnahmemodul 16 verbunden und das zweite Befestigungsmittel 86 ist mit dem ersten Befestigungsmittel 85 so verbunden, dass sie in Wirkung miteinander stehen. Die Rückseite 88 der Abdeckung 78 steht in Kontakt mit dem zweiten Befestigungsmittel 86, welches dazu eingerichtet ist, das erste Befestigungsmittel 85 zumindest teilweise bevorzugt entgegengesetzt zur Rückseite 88 zu verbiegen. Dafür weist das erste Befestigungsmittel 85 einen ersten Schenkel 89 und einen zweiten Schenkel 90 auf, welche im Wesentlichen parallel zueinander verlaufen und beabstandet sind. Das zweite Befestigungsmittel 86 umfasst in der abgebildeten Ausgestaltung eine Schraube, die sich zwischen dem ersten Schenkel 89 und dem zweiten Schenkel 90 in einer mit Gewinde versehenen Öffnung erstreckt. Das erste Befestigungsmittel 85 ist gemäß der abgebildeten Ausgestaltung mittels einer Schraube mit dem Aufnahmemodulkörper 22 befestigt. Alternativ zu den zwei Schenkel kann auch eine einzelne Platte mit einem Sackloch und einem Gewinde vorgesehen werden. Der Aufnahmemodulkörper 22 umfasst vorzugsweise Stahl.

Die Fig. 4 zeigt eine teilweise geschnittene Innenansicht auf die Prozessüberwachungsvorrichtung mit einer zweiten Ausgestaltung der Befestigungsanordnung 84. Die zweite Ausgestaltung unterscheidet sich von der ersten Ausgestaltung im Wesentlichen durch die zusätzliche Führung 87, welche im Aufnahmemodulkörper 22 eingearbeitet ist. Die Form des ersten Befestigungsmittels 85 erlaubt es die Befestigungsanordnung 84 in Längsrichtung des Aufnahmemoduls 16 beweglich anordenbar. Die Führung 87 ist als T-Nut und der Körper des ersten Befestigungsmittel 85 ist entsprechend abschnittsweise komplementär dazu ausgebildet (siehe Fig. 5). Das erste Befestigungsmittel 85 kann ebenfalls über eine Schraube form- und/oder kraftschlüssig mit dem Aufnahmemodulkörper 22 verbunden werden. Dabei müssen keine Öffnungen mit Gewinde im Aufnahmemodulkörper 22 vorgesehen werden. Stattdessen kann das erste Befestigungsmittel 85 in der Führung durch Verspannen des Grundkörpers eingespannt werden.

Die Fig. 5 zeigt eine perspektivische Ansicht auf das erste Befestigungsmittel 85 der zweiten Ausgestaltung der Befestigungsanordnung 84. Das erste Befestigungsmittel 85 weist in einem Querschnitt zumindest in einem Endabschnitt einen T-förmige Grundform auf. Diese ist komplementär zu der Form der Führung ausgestaltet. Der Grundkörper des ersten Befestigungsmittels 85 umfasst vorzugweise Stahl.

### Bezugszeichenliste

Koppleranordnung 1
Coriolis-Durchflussmessgerät 2
Messrohr 3
Messrohrmodul 4
Kopplerelement 6
Aufnahmemodul 16
Schlauch- und/oder Kunststoffrohrsystem 17
Prozessüberwachungseinheit 19
Aufnahmemodulkörper 22
Aufnahme 23
Montagefläche 26
Prozessanschluss 30
Fixiervorrichtung 34
Fixierkörperanordnung 35
Erregermagnet 36
Sensormagnet 38
erstes Fixierelement 40
zweites Fixierelement 41
Fixierfläche 42
Fixierfläche 43
Auflagefläche 44
Auflagefläche 45
Verbindungsvorrichtung 46
Verbindungskörper 47
Schließvorrichtung 48
Einspannfläche 49
Führung 51
Anlage für biotechnische Anwendungen 74
Gehäuse 75
Gehäusewandung 76
Gehäuseinneres 77
Abdeckung 78
Öffnung 79
Aufnahmeabschnitt 80
Absatz 81
Abdeckungsfläche 82
Absatzfläche 83
Befestigungsanordnung 84
erstes Befestigungsmittel 85
zweite Befestigungsmittel 86
Führung 87
Rückseite 88
erster Schenkel 89
zweiter Schenkel 90

## Patentansprüche

1. Prozessüberwachungsvorrichtung, bevorzugt für pharmazeutische Bioprozessanwendungen, umfassend:
- ein Messrohrmodul (4),
wobei das Messrohrmodul (4) mindestens ein, von einem Medium durchströmbares Messrohr (3) umfasst,
wobei das Messrohrmodul (4) eine erste Schwingungserregerkomponente mindestens eines Schwingungserregers aufweist, welcher dazu eingerichtet ist, das Messrohrmodul (4), insbesondere das mindestens eine Messrohr (3) zu Schwingungen anzuregen,
wobei das Messrohrmodul (4) eine erste Schwingungssensorkomponente mindestens eines Schwingungssensors aufweist, welcher dazu eingerichtet ist, die Schwingungen des mindestens einen Messrohres (3) zu erfassen,
- ein Aufnahmemodul (16),
wobei das Aufnahmemodul (16) eine Aufnahme (23) aufweist,
wobei das Messrohrmodul (4) in die Aufnahme (23) einführbar ist,
wobei das Messrohrmodul (4) mechanisch trennbar mit dem Aufnahmemodul (16) verbindbar ist,
wobei das Aufnahmemodul (16) eine zweite Schwingungserregerkomponente des mindestens einen Schwingungserregers aufweist,
wobei das Aufnahmemodul (16) eine zweite Schwingungssensorkomponente des mindestens einen Schwingungssensors aufweist; und
- eine Anlage (74) für biotechnische Anwendungen,
**gekennzeichnet durch**:
dass die Anlage (74) ein Gehäuse (75) aufweist,
dass das Gehäuse (75) eine Gehäusewandung (76) aufweist, welches ein Gehäuseinneres (77) begrenzt,
dass die Gehäusewandung (76) eine Abdeckung (78) aufweist,
dass die Abdeckung (78) eine Öffnung (79) aufweist,
dass sich das Aufnahmemodul (16), insbesondere die Aufnahme (23) durch die Öffnung (79) in das Gehäuseinnere (77) erstreckt.

2. Prozessüberwachungsvorrichtung nach Anspruch 1,
wobei das Aufnahmemodul (16) einen Aufnahmeabschnitt (80) außerhalb des Gehäuseinneren (77) aufweist,
wobei das Aufnahmemodul (16) im Aufnahmeabschnitt (80) einen insbesondere umlaufenden Absatz (81) aufweist,
wobei die Abdeckung (78) eine Abdeckungsfläche (82) aufweist,
wobei der Absatz (81) eine Absatzfläche (83) aufweist,
wobei die Absatzfläche (83) und die Abdeckungsfläche (82) einander zugewandt sind.

3. Prozessüberwachungsvorrichtung nach Anspruch 1 und/oder 2,
wobei sich die Aufnahme (23) in eine Aufnahmerichtung erstreckt,
wobei das Aufnahmemodul (23) derart in der Öffnung (79) angeordnet ist, dass die Aufnahmerichtung einen vektoriellen Anteil mit einer Richtung entgegengesetzt zu einer Gravitationsrichtung aufweist.

4. Prozessüberwachungsvorrichtung nach mindestens einem der vorhergehenden Ansprüche,
wobei das Aufnahmemodul (16) eine Befestigungsanordnung (84) umfasst,
wobei die Befestigungsanordnung (84) im Gehäuseinneren (77) angeordnet ist,
wobei die Befestigungsanordnung (84) dazu eingerichtet ist, das Aufnahmemodul (16) mit der Abdeckung (78) mechanisch zu verbinden.

5. Prozessüberwachungsvorrichtung nach Anspruch 4,
wobei die Befestigungsanordnung (84) ein erstes Befestigungsmittel (85) umfasst,
wobei das erste Befestigungsmittel (85) mit dem Aufnahmemodul (16) insbesondere in einer Führung (87) beweglich verbunden ist,
wobei die Befestigungsanordnung (84) ein zweites Befestigungsmittel (86) umfasst,
wobei das erste Befestigungsmittel (85) in Wirkung mit dem zweiten Befestigungsmittel (86) steht.

6. Prozessüberwachungsvorrichtung nach Anspruch 5,
wobei die Abdeckung (78) eine Rückseite (88) aufweist,
wobei das zweite Befestigungsmittel (86) dazu eingerichtet ist, das erste Befestigungsmittel (85) zumindest teilweise bevorzugt entgegengesetzt zur Rückseite (88) zu verbiegen.

7. Prozessüberwachungsvorrichtung nach mindestens einem der vorhergehenden Ansprüche,
wobei die Anlage (74) einen Bioreaktor, eine Anlage für chromatographische Aufreinigungsverfahren, eine Crossflow-Anlage oder ähnliches umfasst.

8. Prozessüberwachungsvorrichtung nach mindestens einem der vorhergehenden Ansprüche,
wobei zumindest das Messrohrmodul (4) und das Aufnahmemodul (16) ein modulares Coriolis-Durchflussmessgerät (2) bilden.

## Claims

1. A process monitoring device, preferably for pharmaceutical bioprocess applications, comprising:
- a measuring tube module (4),
wherein the measuring tube module (4) comprises at least one measuring tube (3) through which a medium can flow,
wherein the measuring tube module (4) has a first vibration exciter component of at least one vibration exciter which is set up to excite the measuring tube module (4), in particular the at least one measuring tube (3), to vibrate,
wherein the measuring tube module (4) has a first vibration sensor component of at least one vibration sensor, which is set up to detect the vibrations of the at least one measuring tube (3),
- a recording module (16),
wherein the receiving module (16) has a receptacle (23),
wherein the measuring tube module (4) can be inserted into the receptacle (23),
wherein the measuring tube module (4) can be mechanically disconnected from the receiving module (16),
wherein the receiving module (16) comprises a second vibration exciter component of the at least one vibration exciter,
wherein the receiving module (16) comprises a second vibration sensor component of the at least one vibration sensor; and
- a plant (74) for biotechnical applications,
wherein the system (74) has a housing (75),
wherein the housing (75) has a housing wall (76) which delimits an interior (77) of the housing,
wherein the housing wall (76) has a cover (78),
wherein the cover (78) has an opening (79),
wherein the receptacle module (16), in particular the receptacle (23), extends through the opening (79) into the interior (77) of the housing.

2. Process monitoring device according to claim 1,
wherein the receiving module (16) has a receiving section (80) outside the interior (77) of the housing,
wherein the receiving module (16) has a particularly circumferential shoulder (81) in the receiving section (80),
wherein the cover (78) has a covering surface (82),
wherein the heel (81) has a heel surface (83),
wherein the heel surface (83) and the cover surface (82) face each other.

3. Process monitoring device according to claim 1 and/or 2,
wherein the receptacle (23) in a receiving direction,
wherein the pick-up module (23) is arranged in the opening (79) such that the pick-up direction has a vectorial portion with a direction opposite to a gravitational direction.

4. Process monitoring device according to at least one of the preceding claims,
wherein the receiving module (16) comprises a fastening arrangement (84),
wherein the fastening arrangement (84) is arranged inside the housing (77),
wherein the fastening arrangement (84) is designed to mechanically connect the receiving module (16) to the cover (78).

5. Process monitoring device according to claim 4,
wherein the fastening arrangement (84) comprises a first fastening means (85),
wherein the first fastening means (85) is movably connected to the receiving module (16), in particular in a guide (87)
wherein the fastening arrangement (84) comprises a second fastening means (86),
wherein the first fastening means (85) is in action with the second fastening means (86).

6. Process monitoring device according to claim 5,
wherein the cover (78) has a rear side (88),
wherein the second fastening means (86) is arranged to bend the first fastening means (85) at least partially, preferably in the opposite direction to the rear side (88).

7. Process monitoring device according to at least one of the preceding claims,
wherein the plant (74) comprises a bioreactor, a plant for chromatographic purification processes, a crossflow plant or the like.

8. Process monitoring device according to at least one of the preceding claims,
wherein at least the measuring tube module (4) and the receiving module (16) form a modular Coriolis flowmeter (2).

## Revendications

1. Dispositif de surveillance de processus, de préférence pour des applications de bioprocessus pharmaceutiques, comprenant :
- un module de tube de mesure (4),
le module de tube de mesure (4) comprenant au moins un tube de mesure (3) pouvant être traversé par un fluide,
le module de tube de mesure (4) présentant un premier composant d'excitation d'oscillations d'au moins un excitateur d'oscillations, qui est conçu pour exciter le module de tube de mesure (4), en particulier le au moins un tube de mesure (3), en oscillations,
dans lequel le module de tube de mesure (4) comprend un premier composant de détection de vibrations d'au moins un capteur de vibrations qui est conçu pour détecter les vibrations du au moins un tube de mesure (3),
- un module d'enregistrement (16),
le module de réception (16) présentant un logement (23),
le module de tube de mesure (4) pouvant être introduit dans le logement (23),
le module de tube de mesure (4) pouvant être relié mécaniquement de manière séparable au module de réception (16),
dans lequel le module de réception (16) présente un deuxième composant d'excitation de vibrations de l'au moins un excitateur de vibrations,
dans lequel le module de réception (16) comprend un deuxième composant de capteur de vibrations du au moins un capteur de vibrations ; et
- une installation (74) pour les applications biotechnologiques,
l'installation (74) comprenant un boîtier (75),
dans lequel le boîtier (75) comprend une paroi de boîtier (76) qui délimite un intérieur de boîtier (77),
dans lequel la paroi de boîtier (76) présente un couvercle (78),
dans lequel le couvercle (78) présente une ouverture (79),
le module de réception (16), en particulier la réception (23), s'étendant à travers l'ouverture (79) dans l'intérieur du boîtier (77).

2. Dispositif de surveillance de processus selon la revendication 1,
dans lequel le module de réception (16) comprend une section de réception (80) à l'extérieur de l'intérieur du boîtier (77),
le module de réception (16) présentant dans la section de réception (80) un épaulement (81) en particulier périphérique,
dans lequel le couvercle (78) comprend une surface de recouvrement (82),
dans lequel le talon (81) présente une surface de talon (83),
dans lequel la surface de talon (83) et la surface de couverture (82) sont tournées l'une vers l'autre.

3. Dispositif de surveillance de processus selon la revendication 1 et/ou 2,
dans lequel le logement (23) s'étend dans une direction de réception,
dans lequel le module d'enregistrement (23) est disposé dans l'ouverture (79) de telle sorte que la direction d'enregistrement présente une partie vectorielle avec une direction opposée à une direction de gravitation.

4. Dispositif de surveillance de processus selon au moins l'une des revendications précédentes,
dans lequel le module de réception (16) comprend un ensemble de fixation (84),
l'ensemble de fixation (84) étant disposé à l'intérieur du boîtier (77),
dans lequel l'ensemble de fixation (84) est adapté pour relier mécaniquement le module de réception (16) au couvercle (78).

5. Dispositif de surveillance de processus selon la revendication 4,
dans lequel l'ensemble de fixation (84) comprend un premier moyen de fixation (85),
le premier moyen de fixation (85) étant relié de manière mobile au module de réception (16), en particulier dans un guide (87)
dans lequel l'ensemble de fixation (84) comprend un deuxième moyen de fixation (86),
dans lequel le premier moyen de fixation (85) est en action avec le deuxième moyen de fixation (86).

6. Dispositif de surveillance de processus selon la revendication 5,
dans lequel le couvercle (78) présente une face arrière (88),
dans lequel le deuxième moyen de fixation (86) est adapté pour plier le premier moyen de fixation (85) au moins partiellement, de préférence dans le sens opposé à la face arrière (88).

7. Dispositif de surveillance de processus selon au moins l'une des revendications précédentes,
dans lequel l'installation (74) comprend un bioréacteur, une installation pour des procédés de purification chromatographique, une installation à flux croisé ou similaire.

8. Dispositif de surveillance de processus selon au moins l'une des revendications précédentes,
dans lequel au moins le module de tube de mesure (4) et le module de réception (16) forment un débitmètre à effet Coriolis modulaire (2).
